## Europäisches Patentamt

## European Patent Office

## Office européen des brevets

(19)

(11) Veröffentlichungsnummer: **0 019 248**
**B1**

(12) **EUROPÄISCHE PATENTSCHRIFT**

(45) Veröffentlichungstag der Patentschrift:
09.02.83

(51) Int. Cl.³: **C 02 F 3/08**

(21) Anmeldenummer: **80102602.2**

(22) Anmeldetag: **10.05.80**

(54) Tauchtropfkörper für eine mechanisch-biologische Abwasser-Reinigungsanlage.

(30) Priorität: **12.05.79 DE 2919244**

(43) Veröffentlichungstag der Anmeldung:
**26.11.80 Patentblatt 80/24**

(45) Bekanntmachung des Hinweises auf die Patenterteilung:
**09.02.83 Patentblatt 83/6**

(84) Benannte Vertragsstaaten:
**AT BE CH DE FR GB IT LI LU NL SE**

(56) Entgegenhaltungen:
**CH-A-380 041**
**CH-A-511 193**
**DE-A-2 710 071**
**DE-A-2 806 415**
**US-A-3 703 961**
**US-A-4 137 172**
**TECHNISCHE RUNDSCHAU, Band 72, Nr. 5, Februar 1980, Bern, CH Biologische Kompaktklär-anlagen; Seiten 17, 18: Absatz »Biospiralkörper mit 5m Durchmesser«.**

(73) Patentinhaber: **Mecapec S.A., Postfach, CH-8716 Schmerikon (CH)**

(72) Erfinder: **Fuchs, Ernst, Oberseestrasse, D-8716 Schmerikon (CH)**
Erfinder: **Lüscher, Max, Hummel 25, D-8716 Schmerikon (CH)**
Erfinder: **Fässler, Kurt, Mürtschenstrasse 12, D-8716 Schmerikon (CH)**

(74) Vertreter: **Rottmann, Maximilian, Hug Interlizenz AG alte Zürcherstrasse 49, CH-8903 Birmensdorf/ZH (CH)**

## Tauchtropfkörper für eine mechanisch-biologische Abwasser-Reinigungsanlage

Die Erfindung bezieht sich auf einen Tauchtropfkörper für eine mechanisch-biologische Abwasser-Reinigungsanlage, mit einer Drehlagerung und einem Drehantrieb sowie mit einer Mehrzahl von Scheiben als Träger für eine biologisch aktive Reinigungsmasse, wobei die Scheiben an mindestens einer ihrer Oberflächen Vorsprünge und Vertiefungen als Tragorgane für die Reinigungsmasse aufweisen.

Ein Tauchtropfkörper der eingangs erwähnten Art ist bekannt, beispielsweise aus der CH-A-380 041. Die als Scheiben ausgebildeten Träger für die biologisch aktive Reinigungsmasse, auch als »biologischer Rasen« bezeichnet, bewirken bei ihrer Drehung ein fortwährendes Eintauchen und Auftauchen der Trägeroberfläche mit der Reinigungsmasse und damit deren intensive Belüftung bzw. Benetzung mit dem zu reinigenden Abwasser. Die Reinigungsmasse baut sich durch das Wachstum der sich bildenden Mikroorganismen mit zunehmender Dicke an der Trägeroberfläche auf, bis die Sauerstoffzufuhr zu den untersten Schichten unterbunden und diese zum Absterben gebracht werden, worauf sich die Reinigungsmasse ablöst und dem sich neu bildenden Bewuchs Platz macht. Bei der bekannten Ausführung bestehen die scheibenförmigen Träger der Reinigungsmasse aus in Radialebenen angeordneten Platten mit noppenförmigen Erhebungen zur Vergrößerung der Oberfläche bei gegebenen Gesamtabmessungen und zur Verbesserung des Anhaltens der Reinigungsmasse. Von den im Verlauf der Umdrehung des Tauchtropfkörpers aus dem Wasserspiegel auftauchenden Scheibenabschnitten läuft das Abwasser jedoch rasch ab, vor allem jeweils im Stadium des periodisch auftretenden Ablösens und vor Erreichen eines neuen stärkeren Anwachsens der Reinigungsmasse.

Ferner sind aus der US-A-4 137 172 Tauchtropfkörper bekannt geworden, deren Scheiben aus wellblechartigen Platten bestehen, die mit Wechselweise über Kreuz angeordneten Wellen in Axialrichtung des Tauchtropfkörpers unmittelbar aneinanderliegend zu größeren Scheibenpaketen zusammengesetzt sind. Dadurch ergibt sich insgesamt ein System von sich kreuzenden, aber bis auf die umfangsseitigen Endmündungen im wesentlichen allseitig geschlossenen Durchströmkanälen für das Abwasser. Die Verweilzeit des Abwassers ist dabei vergleichsweise groß, jedoch unterliegt das verwickelte Kanalsystem der praktisch kaum auszuschließenden Verstopfungsgefahr durch die anwachsende Reinigungsmasse. Auch das periodische Ablösen und die Erneuerung der Reinigungsmasse kann bei einem solchen Tauchtropfkörper ohne äußerst aufwendige Reinigungsmaßnahmen nicht sichergestellt werden. Es besteht sogar die Gefahr des Absterbens der biologischen Reinigungsmasse, womit der Reinigungseffekt praktisch zum Erliegen kommt. Endlich ist die Sauerstoffeinwirkung innerhalb des im wesentlichen geschlossenen Kanalsystems vergleichsweise schwach.

Aufgabe der Erfindung ist daher die Schaffung eines Tauchtropfkörpers mit verbesserter spezifischer, d. h. auf die Scheibenoberfläche und die Gesamtabmessungen sowie das Gewicht des Tauchtropfkörpers bezogenen Reinigungsleistung. Die erfindungsgemäße Lösung dieser Aufgabe kennzeichnet sich bei einem Tauchtropfkörper der eingangs genannten Art durch die im Patentanspruch 1 angegebenen Merkmale.

Infolge dieser Gestaltung der Scheibenoberflä...1en ergibt sich eine zusätzliche Belüftungs- und Schöpfwirkung. Beim Eintauchen in das Abwasser wird nämlich verstärkt Luft eingetragen und verwirbelt, während beim Auftauchen eine vergleichsweise große Abwassermenge mitgeführt und beim Ablaufen über das jeweils der Luft ausgesetzte Scheibensegment besonders intensiv belüftet wird. Als besonders wirksam kommt dabei ein in Umfangsrichtung gekrümmter, vorzugsweise spiralförmiger Verlauf der Rippen und Nuten in Betracht. Die Schöpfwirkung kann weiter dadurch intensiviert werden, daß die Vorsprünge, insbesondere die Rippen, der Scheiben im Axialschnitt auf wenigstens einer Seite eine mindestens abschnittsweise unter einem Winkel von weniger 90° gegen die Axialrichtung des Tauchtropfkörpers geneigt verlaufende oder gekümmte Profilkontur aufweisen. Insbesondere eine einfache, geradlinig aber gegen die Scheibenebene geneigt begrenzte Profilkontur der Rippen zeichnet sich durch vergleichsweise günstige Herstellungsmöglichkeiten aus, vor allem im Hinblick auf die Formgebung des im allgemeinen hierzu verwendeten Kunststoffes, beispielsweise eines geeigneten Schaumstoffes. Im Vergleich zu einer bezüglich der Scheibenebene rechtwinkligen Rippen-Profilform ergibt sich eine merklich bessere Schöpfwirkung auf der spitzwinklig einspringenden Profilseite.

Bei Tauchtropfkörpern der bekannten Art mit im wesentlichen ebenen Scheiben tritt im allgemeinen nur ein quer zur Drehachse gerichtetes Durchströmen des Abwassers auf. Dabei sind für ein gleichmäßiges Durchströmen des Tauchtropfkörpers im allgemeinen besondere Verteilvorrichtungen erforderlich. Es sind daher auch bereits Tauchtropfkörper mit wendelförmiger Struktur bekannt geworden (CH-PS 537 340), die bei ihrer Drehung selbsttätig eine Förderwirkung in Axialrichtung und damit eine entsprechende Strömungsbewegung des Abwassers erzeugen. Diese bekannte Konstruktion benutzt wendelförmige Scheiben aus kompakten und vergleichsweise schwerem Material, beispielsweise dichtem Kunststoff, und macht außerdem vergleichsweise komplizierte und aufwendige Zentrier-, Distanz- und Verbindungselemente zwischen den in genauer gegenseitiger Anordnung zu montierenden Wendelscheiben erforderlich. Diese Konstruktionsmerkmale führen wieder zum Grundproblem vorliegender Erfindung, nämlich einer Erhöhung der auf die Scheibenoberfläche und die Gesamtabmessungen sowie das Gewicht des Tauchtropfkörpers bezogenen Reinigungsleistung. Eine nebengeordnete Lösung der Erfindungsaufgabe geht gemäß dem Oberbegriff des Patentanspruchs 2 aus von einem Tauchtropfkörper für eine mechanisch-biologische Abwasser-Reinigungsanlage, mit einer Drehlagerung und einem Drehantrieb sowie mit einer Mehrzahl von in mindestens einem Paket angeordneten Scheiben als Träger für eine biologisch aktive Reinigungsmasse, wobei die Scheiben an mindestens einer ihrer Oberflächen Vorsprünge und Vertiefungen als Tragorgane für die Reinigungsmasse aufweisen und in Richtung der Drehachse des Tauchtropfkörpers hintereinanderliegend angeordnet sind. Sie kennzeichnet sich dadurch, daß die Scheiben in sektorartige Abschnitte gegliedert sind und daß an den radialen Randbereichen der Scheibenabschnitte Durchlässe zwischen den axialen Zwischenräumen der Scheiben sowie Strömungs-Umlenkorgane für die Überführung des relativ zu den Scheiben bewegten Abwassers von einer Scheibenseite zur anderen vorgesehen sind.

Diese Gestaltung der Scheiben des Tauchtropfkörpers ermöglicht in vorteilhaft einfacher Weise eine gleichmäßige Durchströmung des Tauchtropfkörpers mit dem zu reinigenden Abwasser. Insbesondere in Verbindung mit einer Gestaltung des Tauchtropfkörpers gemäß den Merkmalen des Patentanspruchs 1 ergibt sich eine kaskadenartig verstärkte Reinigungswirkung, indem nämlich jeweils das von der in axialer Durchströmungsrichtung vorangehenden Scheibe teilweise gereinigte Abwasser unmittelbar einem nachfolgenden, verstärkten Belüftungseffekt unterzogen wird. Eine solche Scheibengestaltung mit Strömungs-Umlenkkörpern im Bereich von radialen Scheibendurchlässen empfiehlt sich insbesondere bei größeren Scheibenabmessungen, die ohnehin einen Aufbau aus sektorartigen Abschnitten erforderlich macht.

Eine vorteilhafte Ausführungsform der vorgenannten Weiterbildung kennzeichnet sich dadurch, daß die Durchlässe an den radialen Randbereichen der sektorartigen Scheibenabschnitte als durchgehende Radialschlitze ausgebildet sind, wobei die Strömungs-Umlenkorgane als gegen die Scheibenebene vorzugsweise spitzwinklig abgewinkelte Flächenabschnitte des Scheibenkörpers ausgebildet sind. Eine solche Ausführung empfiehlt sich besonders bei einer Zusammensetzung der Scheiben aus plattenförmigen Sektorteilen entsprechend den Hauptmerkmalen der Erfindung, weil sich die Radialschlitze hierbei ohne besondere Formgebungsmaßnahmen umbilden lassen. Auch die abgewinkelten Flächenabschnitte des Scheibenkörpers bereiten hierbei praktisch keinen Herstellungs-Mehraufwand.

Weitere Merkmale und Vorteile der Erfindung werden anhand der in den Zeichnungen dargestellten Ausführungsbeispielen erläutert. Hierin zeigt

Fig. 1 einen Tauchtropfkörper mit Drehgestell, Drehlagerung und Drehantrieb im Teil-Axialschnitt,

Fig. 2 den Tauchtropfkörper nach Fig. 1 in Axialansicht,

Fig. 3 eine Axialansicht eines als Sektorplatte ausgebildeten Scheibenteils des Tauchtropfkörpers nach Fig. 1,

Fig. 4 in größerem Maßstab einen Tangentialschnitt der radialen Randabschnitte eines Scheibenteils gemäß Schnittlinie IV-IV in Fig. 3,

Fig. 5 in einem Maßstab entsprechend Fig. 4 einen Axialschnitt des radial äußeren und radial inneren Endabschnitts eines Scheibenteils nach Fig. 3,

Fig. 6 in einem Tangentialschnitt die zusammenstoßenden, radialen Randabschnitte mehrerer Scheibenteile nach Fig. 3 bzw. 4, in einem Maßstab entsprechend Fig. 4,

Fig. 7 eine schematisch-perspektivische Ansicht einer wendelförmigen Scheibe einer anderen Ausführung eines Tauchtropfkörpers,

Fig. 8 eine Axialansicht einer weiteren Ausführung einer Scheibe mit beiderseitigen Rippen und Nuten für einen weiteren Tauchtropfkörper und

Fig. 9 einen Teil-Tangentialschnitt mit einem Rippenprofil, beispielsweise für eine Tauchtropfkörper-Scheibe nach Fig. 8.

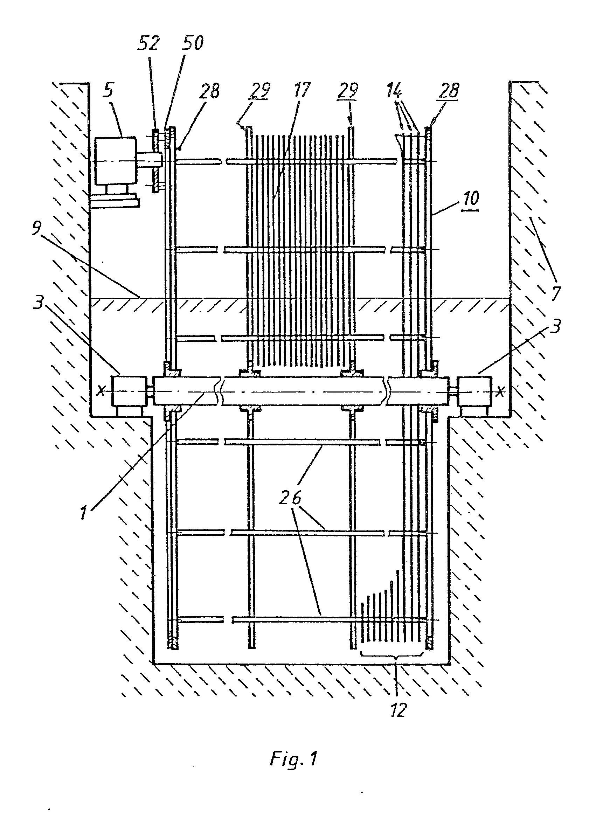

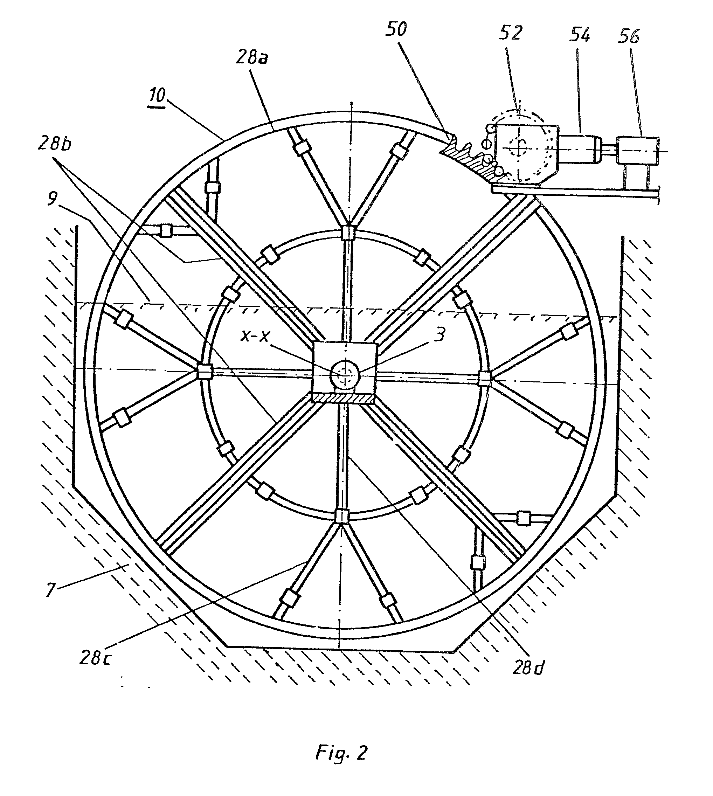

Der in Fig. 1 dargestellte Tauchtropfkörper 10 ist insgesamt zylinderförmig ausgebildet und umfaßt ein Drehgestell mit scheibenförmigen Radialträgern 28 sowie dazwischen angeordneten Axialträgern 26. Die Radialträger 28 sind in der aus Fig. 2 ersichtlichen Weise als Fachwerkrahmen mit je einem in Umfangsrichtung verlaufenden, äußeren Tragring 28a und mehreren, verstärkten Radialstegen 28b ausgebildet. Weitere Radialstege 28c und 28d vervollständigen das in seiner Ebene schubsteif ausgebildete Fachwerk jeweils eines Radialträgers 28. Über die gesamt Axiallänge des Tauchtropfkörpers mit gegenseitigem Abstand verteilt sich mehrere Zwischen-Radialträger 29 angeordnet, zwischen denen sich in der aus Fig. 1 ersichtlichen Weise jeweils ein Paket 12 von Trägerscheiben 14 für eine biologisch aktive Reinigungsmasse befindet. Die Zwischen-Radialträger können leichter ausgeführt sein als der in Fig. 2 sichtbare End-Radialträger, vorzugsweise mit schwächeren Radialstegen 28b.

Die Radialträger mit den Scheibenpaketen sind auf einer Zentralachse 1 zentriert angeordnet, wobei die beiderseitigen Enden dieser Achsen in hermetisch abgedichteten Drehlagern 3 aufgenommen sind. An dem Tragring 28a des bezüglich Fig. 1 linken Radialträgers 28 ist ein in Fig. 2 abschnittsweise angedeuteter Zahnkranz 50 befestigt, mit dem ein Zapfenritzel 52 eines Antriebsaggregats 5 (siehe Fig. 1) kämmt. Auf diese Weise wird der gesamte Tauchtropfkörper 10, der bis über die Zentralachse 1 unter den Abwasserspiegel 9 innerhalb eines Klärbeckens 7 eintaucht, in langsame, stetige Umdrehung versetzt. Hierbei tauchen die Scheiben 14 ständig auf einer Seite in das Abwasser ein, während auf der anderen Seite Scheibenbereiche auftauchen und das mitgeführte Abwasser der Einwirkung des Luftsauerstoffs aussetzen.

Das Antriebsaggregat 5 umfaßt, wie in Fig. 2 schematisch angedeutet, zwei axial fluchtend angeordnete und miteinander gekuppelte, beispielsweise mit ihren Rotoren auf der gleichen Welle sitzende Antriebsmotoren 54 und 56. Beide Antriebsmotoren wirken somit auf das Zapfenritzel 52 und damit auf den Zahnkranz 50. Der Motor 54 ist in dieser Anordnung für den Dauerantrieb bestimmt und entsprechend ausgelegt, während der Motor 56 im Normalbetrieb ausgeschaltet ist und ohne Belastung des Antriebes mitläuft, jedoch in Störungsfällen zur Erhöhung des Antriebs-Drehmomentes zusätzlich eingeschaltet werden kann. Diese Anordnung trägt dem Umstand Rechnung, daß längere Stillstandszeiten, wie sie bei manchen Betriebsstörungen auftreten, zu stark exzentrischen Gewichtsverteilungen innerhalb des Tauchtropfkörpers führen, weil die Reinigungsmasse im aufgetauchten Segment der Scheiben austrocknet bzw. zerfällt, jedenfalls aber stark an Gewicht einbüßt, und sich bei Wiederaufnahme des Drehbetriebes mit Eintauchen in das Abwasser nur langsam erneut aufbaut, während die Reinigungsmasse im eingetauchten Segment starken Zuwachs erfahren hat und bei Wiederbeginn des Drehbetriebes ihren hohen Wassergehalt beibehält. Solchen exzentrischen Gewichtsverteilungen mit entsprechend periodischen Schwankungen des Antriebsdrehmomentes braucht aber im Normalbetrieb nicht Rechnung getragen zu werden, weil sich hierbei über kurz oder lang eine annähernd homogene Beschaffenheit der Reinigungsmasse einstellt. Die Aufteilung in zwei Antriebsmotoren mit unterschiedlicher Zuschaltung ermöglicht daher eine leistungsärmere Ausführung und damit eine bessere Ausnutzung bzw. einen besseren Leistungsfaktor des Dauerantriebsmotors.

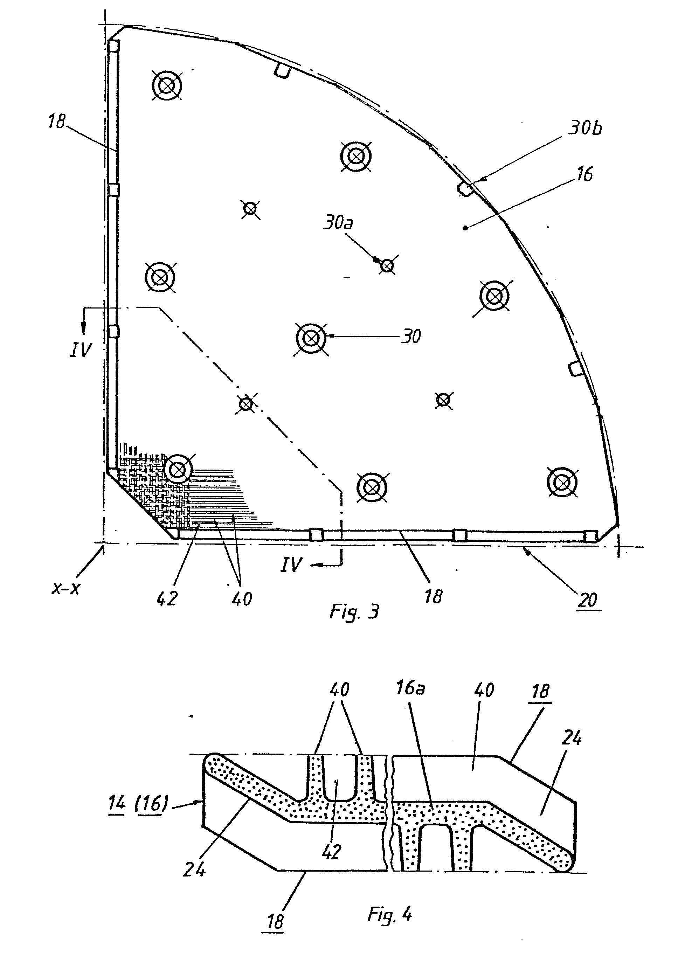

Wie aus Fig. 2 ersichtlich, ist der kreisförmige Querschnitt des Tauchtropfkörpers 10 durch die Radialstege 28b in vier Quadranten aufgegliedert. Entsprechend bestehen die Scheiben 14 aus sektorförmigen, plattenartigen Teilen 16, die sich über einen Zentriwinkel von je 90° erstrecken. Ein solcher Scheibenteil 16 ist in Fig. 3 dargestellt. Eine Mehrzahl solcher Scheibenteile ist jeweils in Richtung der Drehachse X-X des Tauchtropfkörpers hintereinanderliegend angeordnet und zu einem als Montageeinheit verwendbaren Scheiben-Teilpaket 17 verbunden. Ein solches Scheiben-Teilpaket 17 mit sektorförmigem Querschnitt gemäß Fig. 3 ist in Fig. 1 innerhalb der beiden mittleren Zwischen-Radialträger 29 angedeutet.

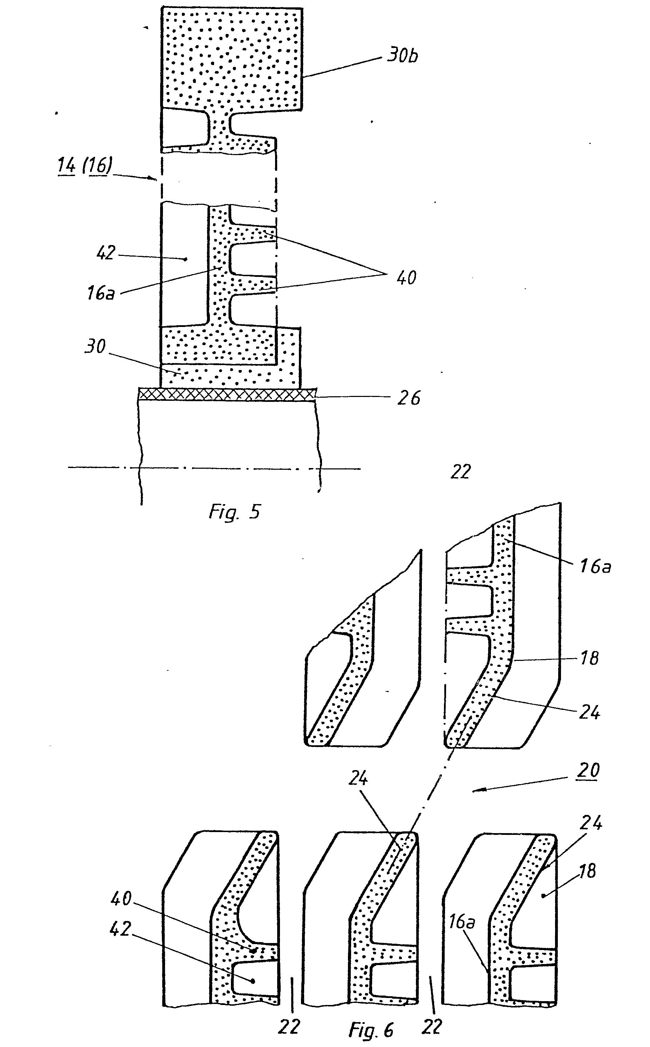

Wie aus Fig. 3 und Fig. 5 weiterhin ersichtlich ist, sind die sektorförmigen Scheibenteile 16 mit verschiedenen Distanz- und Verbindungselementen zu den jeweils benachbarten Scheibenteilen versehen. Dabei sind gemäß Fig. 5 für rohrförmige Axialträger 26 hülsenförmige Distanzelemente 30 vorgesehen, welche zwischen die Scheibenteile eingesetzt sind und jeweils einen Axialträger 26 umgeben. Weiterhin sind über die Sektorfläche verteilt zapfenartige Distanzelemente 30a und nockenartige, am Scheibenumfang angeordnete, Distanzelemente 30b vorgesehen. Die Distanzelemente 30a und 30b sind beispielsweise einstückig an den aus Polystyrol-Schaumstoff bestehenden Scheibenkörper angeformt, während die hülsenförmigen Distanzelemente 30 zwischen den Scheibenteilen eingeklebt werden können. Ein im Querschnitt sektorförmiges Scheiben-Teilpaket 17 mit einer Axialabmessung entsprechend dem Abstand zweier mit Radialträger des Drehgestells kann nun durch Verkleben der zusammenstoßenden, axialen Stirnflächen der Distanzelemente 30 benachbarter Scheibenteile 16 hergestellt werden. Am Aufstellungsort der Reinigungsanlage werden diese Scheiben-Teilpakete sodann bei der Montage des Drehgestells durch Einschieben der Axialträger 26 und Einfügen der Radialträger 28 bzw. Zwischen-Radialträger 29 zur Gesamteinheit des Tauchtropfkörpers zusammengesetzt.

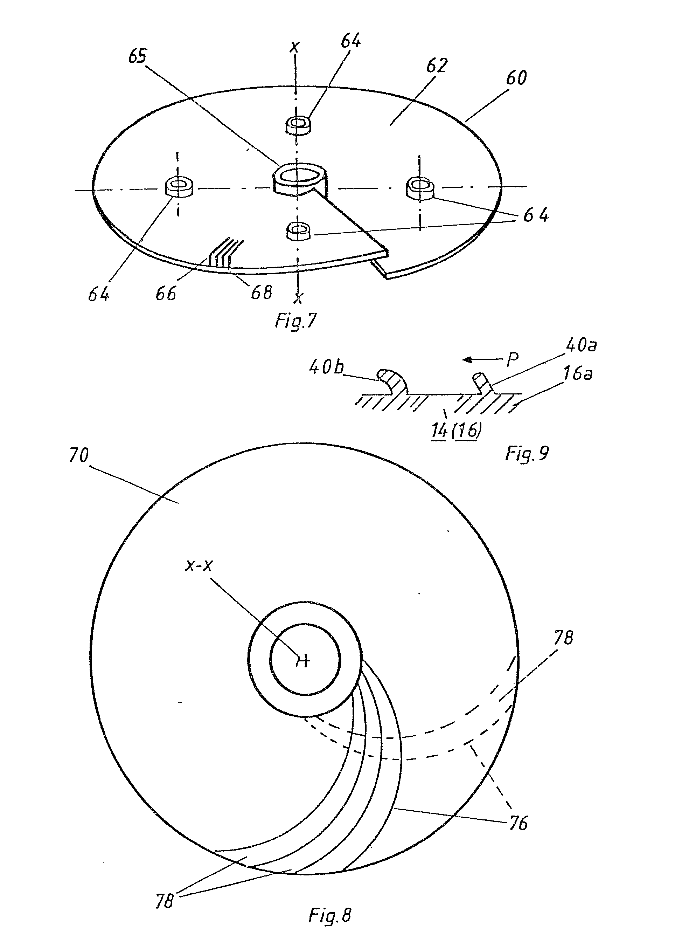

Zur Vergrößerung der aktiven Oberfläche sind in der aus Fig. 4 und 5 ersichtlichen Weise auf beiden axialen Oberflächenseiten einer Scheibe 14 bzw. eines Scheibenteils 16 aus formsteifem Leicht-Kunststoff, und zwar im Beispielsfall aus Schaumstoff, vorzugsweise aus Polystyrol-Schaumstoff, bestehende Erhebungen und Vertiefungen als Tragorgane für die biologisch aktive Reinigungsmasse vorgesehen. Diese Erhebungen sind als an den Scheiben-Grundkörper 16a einstückig angeformte Rippen 40 mit dazwischen befindlichen Nuten 42 ausgebildet. Im Beispiel nach Fig. 3 sind diese Rippen geradlinig ausgebildet und auf jeder Scheibenseite in Form einer Parallelschar angeordnet. In Fig. 3 sind die Rippen 40 auf der Vorderseite des dargestellten Scheibenteils 16 mit vollen Linien, diejenigen auf der Scheibenrückseite mit strichlierten Linien angedeutet. Demgemäß verlaufen die Rippen 40 und Nuten 42 auf beiden Scheibenseiten zueinander rechtwinklig über Kreuz. Auf diese Weise ergibt sich eine optimale Versteifung des Scheibenkörpers in Verbindung mit der vergrößerten Aktivoberfläche. Infolge ihrer geradlinigen Parallelanordnung verlaufen die Rippen jeweils nur im Bereich eines Sektor-Randabschnittes 18 radial, am anderen dagegen tangential bezüglich der Drehachse X-X. Ein Teil der Rippen hat daher jedenfalls einen gegen die Radialrichtung geneigten Verlauf, wodurch sich eine erhöhte Schöpf- und Lufteintragswirkung bezüglich des Abwassers ergibt. Eine ebensolche, gegebenenfalls noch verstärkte Wirkung ergibt sich mit einer Ausführung nach Fig. 8, wobei eine Scheibe 70 mit bezüglich der Drehachse X-X in Umfangsrichtung gekrümmten, gegebenenfalls auch spiralförmig ausgebildeten Rippen 76 und entsprechenden Nuten 78 versehen ist. Auch hier kommt wieder mit dem Vorteil der mechanischen Stabilisierung des Scheibenkörpers ein kreuzweiser Verlauf der Rippenscharen auf beiden axialen Oberflächenseiten einer Scheibe in Betracht, wie dies ebenfalls in Fig. 8 angedeutet ist.

Die Schöpf- und Lufteintragswirkung der Scheiben kann weiterhin durch eine Querschnittsgestaltung der Rippen gemäß Fig. 9 verstärkt werden. Danach sind an der axialen Oberfläche des Grundkörpers 16a einer Scheibe 14 bzw. eines Scheibenabschnitts 16 im Querschnittprofil gegen die Scheibenebene geneigte Rippen 40a bzw. im Querschnittprofil gekrümmte Rippen 40b angesetzt. Für die Schöpfwirkung maßgebend sind dabei die bezüglich der Scheibenebene spitzwinklig geneigten bzw. konkav gekrümmten Profilseiten. Diese Profilseiten bilden rinnenförmige Ausnehmungen, in denen sich beim Eintauchen Luft ansammelt und vergleichsweise weit unter die Abwasseroberfläche eingetragen wird, während beim Auftauchen in der Ausnehmung Wasser mitgeführt wird und über einen großen Oberflächenbereich der Scheibe sich ausbreitend abströmt. Wesentlich ist dabei eine spitzwinklige Neigung bzw. konkave Ausbildung des Rippenprofils in Drehrichtung des betreffenden Scheibenteils gemäß Pfeil P in Fig. 9.

Für eine intensive Arbeitsweise des Tauchtropfkörpers kommt es wesentlich auf eine gleichmäßige Durchströmung mit Abwasser an. Dies kann durch zusätzlichen, axialen Strömungsantrieb des Abwassers im Bereich des Tauchtropfkörpers erreicht werden. Bei den Ausführungen nach Fig. 3 bis 5 wird diese axiale Strömungskomponente dadurch erreicht, daß die Scheiben in sektorartige Abschnitte gegliedert sind, beispielsweise im vorliegenden Fall durch die Unterteilung einer jeden Scheibe in einen Quadranten-Scheibenteil 16, wobei an den radialen Randbereichen 18 dieser Scheibenabschnitte Durchlässe 20 zwischen den axialen Zwischenräumen 22 der Scheiben 14 in der aus Fig. 6 ersichtlichen Weise gebildet sind. An den radialen Randbereichen 18 der Scheibenabschnitte 16 sind gegen die Scheibenebene spitzwinklig abgewinkelte Flächenabschnitte 24 gebildet, die bei der Relativbewegung zwischen Scheibe und Abwasser als Strömungsumlenkorgane wirken und dem relativ zur Scheibenanordnung bewegten Abwasser ein axiale Strömungskomponente mitteilen. Die abgewinkelten Flächenabschnitte bzw. Strömungsumlenkorgane 24 sind dabei in benachbarten radialen Randabschnitten der Scheibenteile beiderseits eines axialen Durchlasses 20 paarweise fluchtend angeordnet, wie dies in Fig. 6 angedeutet ist. Auf diese Weise ergeben sich besonders günstige Verhältnisse hinsichtlich der Umsetzung der peripheralen Relativströmung des Abwassers in eine axiale Relativströmung bezüglich der Scheibenanordnung. Die axialen Durchlässe ergeben sich bei der gezeigten Konstruktion besonders einfach durch die Aufteilung der Scheiben in Form von durchgehenden Radialschlitzen zwischen benachbarten Scheibenteilen. Auch die Formgebung der Strömungs-Umlenkorgane bietet keine Herstellungsschwierigkeiten, da eine einstückige Anformung an die aus Schaumstoff bestehenden Scheibenkörper ohne weiteres möglich ist. Die vorstehend erläuterte, axiale Strömungskomponente des Abwassers durch die Scheibenanordnung kann auch in an sich bekannter Weise durch wendelförmige Ausbildung der Scheiben erreicht werden. Hierfür kommt ebenfalls mit besonderem Vorteil eine Herstellung des Scheibenkörpers aus formsteifem Schaumstoff, vorzugsweise Polystyrol-Schaumstoff, in Betracht. Dies erlaubt eine einfache, einstückige Anformung von Distanz- bzw. Verbindungselementen zu benachbarten Scheiben und damit auch eine einfache Zusammensetzung der gesamten Scheibenanordnung.

Einstückige Schaumstoff-Wendelscheiben kommen vorzugsweise für geringere Durchmesser in Betracht. In Fig. 7 ist schematisch eine derartige Wendelscheibe 60 mit vergleichsweise starkwandigem Scheibenkörper 62 aus Schaumstoff mit einstückig angeformten, hülsenförmigen Distanzelementen 64 sowie mit einer Zentralhülse 65 als Führungs- und Distanzelement angedeutet. Auch hier können gegebenenfalls einstückig Rippen 66 mit dazwischen befindlichen Nuten 68 einstückig an den Schaumstoffkörper angeformt werden.

## Patentansprüche

1. Tauchtropfkörper für eine mechanisch-biologische Abwasser-Reinigungsanlage, mit einer Drehlagerung und einem Drehantrieb sowie einer Mehrzahl von vorzugsweise paketförmig angeordneten Scheiben als Träger für eine biologisch aktive Reinigungsmasse, wobei die Scheiben an mindestens einer ihrer Oberflächen Vorsprünge und Vertiefungen als Tragorgane für die Reinigungsmasse aufweisen, dadurch gekennzeichnet, daß die Vorsprünge bzw. Vertiefungen (40a, 40b) der Scheiben (14) auf wenigstens einer Querschnittsseite eine mindestens abschnittsweise gegen die Scheibenebene geneigt verlaufende oder gekrümmte Kontur aufweisen.

2. Tauchtropfkörper für eine mechanisch-biologische Abwasser-Reinigungsanlage, mit einer Drehlagerung und einem Drehantrieb sowie mit einer Mehrzahl von in mindestens einem Paket angeordneten Scheiben als Träger für eine biologisch aktive Reinigungsmasse, wobei die Scheiben an mindestens einer ihrer Oberflächen Vorsprünge und Vertiefungen als Tragorgane für die Reinigungsmasse aufweisen und in Richtung der Drehachse des Tauchtropfkörpers hintereinanderliegend angeordnet sind, dadurch gekennzeichnet, daß die Scheiben in sektorartige Abschnitte (16) gegliedert sind und daß an den radialen Randbereichen der Scheibenabschnitte (16) Durchlässe (20) zwischen den axialen Zwischenräumen der Scheiben (14) sowie Strömungs-Umlenkorgane (24) für die Überführung des relativ zu den Scheiben bewegten Abwassers von einer Scheibenseite zur anderen vorgesehen sind.

3. Tauchtropfkörper nach Anspruch 2, dadurch gekennzeichnet, daß die Durchlässe (20) an den radialen Randbereichen (18) der sektorartigen Scheibenabschnitte (16) als durchgehende Radialschlitze ausgebildet sind und daß die Strömungs-Umlenkorgane (24) als gegen die Scheibenebene vorzugsweise spitzwinklig abgewinkelte Flächenabschnitte des Scheibenkörpers ausgebildet sind.

4. Tauchtropfkörper nach Anspruch 2 oder 3, dadurch gekennzeichnet, daß die Nuten (40) an mindestens einem radialen Randbereich (18) eines sektorartigen Scheibenabschnittes (16) in einen axialen Durchlaß (20) frei ausmünden und daß die Strömungs-Umlenkorgane (24) beiderseits eines solchen Durchlasses (20) als gegen die Scheibenebene abgewinkelte, zueinander wenigstens annähernd fluchtende Flächenabschnitte des Scheibenkörpers ausgebildet sind.

5. Tauchtropfkörper nach Anspruch 2, 3 oder 4, dadurch gekennzeichnet, daß die Vorsprünge bzw. Vertiefungen (40a, 40b) der Scheiben (14) auf wenigstens einer Querschnittsseite eine mindestens abschnittsweise gegen die Scheibenebene geneigt verlaufende oder gekrümmte Kontur aufweisen.

6. Tauchtropfkörper nach einem der vorangehenden Ansprüche, dadurch gekennzeichnet, daß der Drehantrieb des Tauchtropfkörpers ein Antriebsaggregat (5) mit einem Dauerantriebsmotor (54) sowie mit einem wahlweise zuschaltbaren Zusatzantriebsmotor (56) aufweist.

## Claims

1. Immersion drip body for a mechanical-biological sewage cleaning plant, having a rotary bearing and a rotary drive as well as a plurality of discs, preferably arranged in the form of a packet, as the carrier for a biologically active cleaning mass, whereby at least on one of their surfaces the discs have protrusions and recesses acting as the carrier organs for the cleaning mass, characterised in that the protrusions or recesses (40a, 40b) of the discs (14) on at least one of the cross-sectional sides have a shape which is inclined or curved with respect to the plane of the disc at least by sectors.

2. Immersion drip body for a mechanical-biological sewage cleaning plant, having a rotary bearing and a rotary drive as well as a plurality of discs, arranged in at least one packet, as the carrier for a biologically active cleaning mass, whereby at least on one of their surfaces the discs have protrusions and recesses acting as the carrier organs for the cleaning mass and are arranged one behind the other in the direction of the rotary axis of the immersion drip body, characterised in that the discs are arranged in sector-like sections (16) and that in the radial edge regions of the disc sections (16) there are provided outlets (20) between the axial intermediate spaces of the discs (14) as well as flow direction reversing members (24) for transferring from one side of the disc to the other the sewage moving relative to the discs.

3. Immersion drip body according to Claim 2, charaterised in that the outlets (20) in the radial edge regions (18) of the sector-like disc sections (16) are in the form of through-going radial slots and that the flow reversing members (24) are adapted surface sections of the disc body preferably arranged at an acute angle with respect to the disc plane.

4. Immersion drip body according to claim 2 or 3, characterised in that the grooves (40) open freely into an axial outlet (20) on at least one radial edge region (18) of a sector-like disc section (16) and that the flow-reversing members (24) are arranged on both sides of such an outlet (20) in the form of surface sections of the disc body which are at least slightly aligned with respect to each other and at an angle to the disc plane.

5. Immersion drip body according to claim 2, 3 or 4, characterised in that the protrusions or recesses (40a, 40b) of the discs (14) on at least one of the cross-sectional sides have a shape which at least in sectors is inclined or curved with respect to the disc plane.

6. Immersion drip body according to one of the aforementioned claims, characterised in that the rotary drive of the immersion drip body has a drive aggregate (5) with a continuous drive motor (54) as well as an additional motor (56) which can be optionally connected with it.

## Revendications

1. Lit percolateur immergé pour une installation d'épuration de l'eau résiduaire par voie mécanique-biologique, comprenant un magasin rotatif et un dispositif d'entrainement en rotation, ainsi que plusieurs disques, disposés avantageusement sous forme de paquets, servant de supports pour une masse d'épuration active biologiquement, les disques présentant au moins sur l'une de leurs faces des saillies ou des évidements servant d'organes supports pour la masse d'épuration, caractérisé en ce que au moins sur une partie de section transversale les saillies ou les évidements (40a, 40b) des disques (14) présentent au moins par section un contour incurvé ou s'étendant de manière inclinée par rapport aux plans des disques.

2. Lit percolateur immergé pour une installation d'épuration de l'eau résiduaire par voie mécanique-biologique, comprenant un magasin rotatif et un dispositif d'entrainement en rotation, ainsi que plusieurs disques, disposés en au moins un paquet, servant de supports pour une masse d'épuration active biologiquement, les disques présentant au moins sur l'une de leurs faces des saillies ou des évidements servant d'organes supports pour la masse d'épuration, et étant disposés l'un derrière l'autre suivant la direction de l'axe de rotation du lit percolateur immergé, caractérisé en ce que les disques sont divisés en sections en forme de secteur et en ce que sur les régions marginales radiales des sections de disque (16) sont prévus des passages (20) dans les intervalles axiaux des disques (14) ainsi que des organes de déviation du courant (24) pour le transport d'une face d'un disque à l'autre de l'eau résiduaire déplacés relativement aux disques.

3. Lit percolateur immergé selon la revendication 2, caractérisé en ce que les passages (20) sur les régions marginales radiales (18) des sections de disque en forme de secteur sont agencées en fentes radiales traversantes et en ce que les organes de déviation du courant (24) sont agencés en sections de surface du corps de disque faisant un angle, de préférence aigu, par rapport au plan du disque.

4. Lit percolateur immergé selon la revendication 2 ou 3, caractérisé en ce que les gorges (40) sur au moins une région marginale radiale (18) d'une section de disque en forme de secteur débouchent librement dans un passage axial (20) et en ce que les organes de déviation du courant (24) sont agencés des deux côtés d'un tel passage (20) en sections de surface du corps de disque faisant un angle par rapport au plan du disque et au moins à peu près alignées les unes avec les autres.

5. Lit percolateur immergé selon la revendication 2, 3 ou 4, caractérisé en ce que sur au moins une partie de section droite les saillies ou les évidements (40a, 40b) des disques (14) présentent au moins par section un contour incurvé ou s'étendant de manière inclinée par rapport aux plans des disques.

6. Lit percolateur immergé selon l'une des revendications précédentes, caractérisé en ce que le dispositif d'entrainement en rotation du lit percolateur immergé présente un ensemble d'entrainement (5) ayant un moteur d'entrainement permanent (54) ainsi qu'un moteur d'entrainement supplémentaire (56) pouvant être branché facultativement.

Fig. 1

*Fig. 2*

Fig. 3

Fig. 4

Fig. 5

Fig. 6

Fig.7

Fig.9

Fig.8